# EUROPEAN PATENT APPLICATION

(11) **EP 4 227 811 A1**
(43) Date of publication of application: **16.08.2023**
(21) Application number: 23155070.8
(22) Date of filing: 06.02.2023
(51) Int. Cl.: G06F 11/30, G06F 11/34, G06F 9/50

(54) **SYSTEMS, METHODS, AND APPARATUS FOR MANAGING RESOURCES FOR COMPUTATIONAL DEVICES**

(30) Priority: 11.02.2022 US 202263309511 P; 27.05.2022 US 202263346817 P; 23.06.2022 US 202263355089 P; 08.09.2022 US 202217941002
(71) Applicant: Samsung Electronics Co., Ltd., Suwon-si, Gyeonggi-do 16677 (KR)
(72) Inventor: PINTO, Oscar P., San Jose, CA, 95134 (US)
(74) Representative: Kuhnen & Wacker Patent- und Rechtsanwaltsbüro PartG mbB

(57) **Abstract**

A method may include allocating, using a programming interface, to an application, a resource of a computational device, tracking, using a resource manager, the resource, and determining, using the resource manager, an operation of the application. The method may further include modifying, by the resource manager, based on the determining the operation of the application, a status of at least a portion of the resource. The operation of the application may include a modification of an execution of the application. The modification may be based on an execution state of the application, for example, a valid execution state. The method may further include transferring, based on the determining the operation of the application, an execution of the application to a mechanism to control the application. The method may further include executing, based on the determining the operation of the application, a mechanism to monitor the operation of the application.

## Description

### TECHNICAL FIELD

This disclosure relates generally to computational devices, and more specifically to systems, methods, and apparatus for managing resources for computational devices.

### BACKGROUND

A data processing system may provide one or more storage resources to enable an application to store input data, intermediate data, output data, and/or the like. For example, an application may access one or more local and/or remote storage devices which may be located at a host, a storage server, a storage node, and/or the like. Applications such as data mapping, graph processing, machine learning, and/or the like may involve the use of increasing amounts of storage.

The above information disclosed in this Background section is only for enhancement of understanding of the background of the inventive principles and therefore it may contain information that does not constitute prior art.

### SUMMARY

A method may include allocating, using a programming interface, to an application, a resource of a computational device, tracking, using a resource manager, the resource, and determining, using the resource manager, an operation of the application. The method may further include modifying, by the resource manager, based on the determining the operation of the application, a status of at least a portion of the resource. The operation of the application may include a modification of an execution of the application. The modification may be based on an execution state of the application. The execution state may include a valid execution state. The method may further include transferring, based on the determining the operation of the application, an execution of the application to a mechanism to control the application. The method may further include executing, based on the determining the operation of the application, a mechanism to monitor the operation of the application. The method may further include sanitizing, by the resource manager, based on the determining the operation of the application, the resource. The method may further include modifying, by the resource manager, based on the determining the operation of the application, a status of a request from the application. The request may be a queued request. The request may be an outstanding request. The resource may be one of a computational engine, a computational execution environment, a computational device function, or a memory. The application may be one of an application, a virtual machine, a hypervisor, a container, or a container platform. The tracking may be performed, at least partially, by a host. The tracking may be performed, at least partially, by the computational device. The resource may be a first resource, the computational device may be a first computational device, and the method may further include allocating, using the programming interface, to the application, a second resource of a second computational device, and tracking, using the resource manager, the second resource. The method may further include modifying, by the resource manager, based on the determining the operation of the application, a status of at least a portion of the second resource.

A device may include at least one processor configured to allocate, using a programming interface, to an application, a resource of a computational device, track, using a resource manager, the resource, and determine, using the resource manager, an operation of the application. The at least one processor may be configured to modify, using the resource manager, based on the operation of the application, a status of at least a portion of the resource. The at least one processor may be configured to sanitize, using the resource manager, based on the operation of the application, the resource. The at least one processor may be configured to modify, using the resource manager, based on the operation of the application, a status of a request from the application. The device may be a host. The device may be the computational device.

A device may include a computational resource, and at least one processor configured to provide, using a programming interface, to an application, the computational resource, track, using a resource manager, the computational resource, and determine, using the resource manager, an operation of the application. The at least one processor may be configured to allocate, to the application, the computational resource. The at least one processor may be configured to modify, using the resource manager, based on the operation of the application, a status of at least a portion of the resource. The at least one processor may be configured to sanitize, using the resource manager, based on the operation of the application, the resource. The at least one processor may be configured to modify, using the resource manager, based on the operation of the application, a status of a request from the application. The at least one processor may be configured to operate, at least partially, the resource manager.

### BRIEF DESCRIPTION OF THE DRAWINGS

The figures are not necessarily drawn to scale and elements of similar structures or functions may generally be represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.
Fig. 1 illustrates an embodiment of a computational device scheme in accordance with example embodiments of the disclosure.
Fig. 2 illustrates an embodiment of an architecture for a computational device in accordance with example embodiments of the disclosure.
Fig. 3 illustrates an embodiment of a resource management scheme for a computational device in accordance with example embodiments of the disclosure.
Fig. 4 illustrates some example implementation details for an embodiment of a resource management scheme for a computational device in accordance with example embodiments of the disclosure.
Fig. 5 illustrates an embodiment of a computational resource manager in accordance with example embodiments of the disclosure.
Fig. 6 illustrates an example embodiment of a host apparatus in accordance with example embodiments of the disclosure.
Fig. 7 illustrates an example embodiment of a computational device that may be used to provide a user with access to one or more computational resources through a programming interface in accordance with example embodiments of the disclosure.
Fig. 8 illustrates an embodiment of a method for computational resource management for a computational device in accordance with example embodiments of the disclosure.

### DETAILED DESCRIPTION

A computational device (CD) may implement one or more functions that may perform operations on data. A host may offload a processing task to the computational device by invoking a function that may be implemented by the device. The computational device may perform the function, for example, using one or more computational resources. The computational device may perform the function on data that may be stored at the device and/or on data that it may receive from the host or another device.

A computational device may include one or more resources that may be allocated to, and/or used by, an application such as a program, a virtual machine (VM), a container, and/or the like. Examples of resources may include memory, storage, computational resources, computational functions, and/or the like. The resources may be allocated, for example, using an application programming interface (API). Once a resource is allocated to, and/or used by, an application, however, one or more conditions may develop that may prevent the resource from being used efficiently.

For example, if an application exits unconditionally (which may also be referred to as a crash), resources that had been allocated to the application may become unusable by other applications. Moreover, even if an application exits conditionally (which may be referred to as a normal or controlled exit), the application may fail to free, prior to exiting (or during an exit procedure), resources that had been allocated to the application. Thus, the resources may become unusable by other applications. As another example, an application may exit (e.g., unconditionally) while a request (e.g., a command) issued by the application to the computational device may be queued and/or outstanding. A computational device having resources allocated to the terminated application may be unaware that the application has exited and may continue processing the request, thereby wasting resources.

A resource management scheme in accordance with example embodiments of the disclosure may track one or more computational device resources allocated to one or more applications. Depending on the implementation details, this may enable the management scheme to free one or more of the allocated resources when they may no longer be used, for example, when an application exits, when a container stops, when a VM shuts down, and/or the like. Tracking one or more allocated resources may also enable a resource management scheme to implement one or more security features such as sanitizing freed device memory to protect confidential information of an application to which it was allocated.

Tracking one or more computational device resources allocated to one or more applications may also enable a resource management scheme in accordance with example embodiments of the disclosure to cancel one or more queued requests and/or complete one or more outstanding requests if the application that issued the request terminates. For example, if an application submitted a command to a submission queue, and the application exits before a computational device to which the command was directed finished processing the request, the resource management scheme may cancel the request (e.g., if the computational device has not begun processing the request) and/or complete the request (e.g. with an error status) by placing a corresponding completion in a completion queue (e.g., if the computational device has begun processing the request).

In some embodiments, a resource management scheme in accordance with example embodiments of the disclosure may implement a trap mechanism and/or debug hook. For example, in some embodiments, a trap mechanism may gain control of an application's operation based on an action such as an exit of an application (e.g., conditionally and/or unconditionally), a stopping of a container, a shutdown of a VM, and/or the like. As another example, in some embodiments, a debug hook may trigger the execution of profiling code to understand a flow of resources and/or determine a remedial action by a resource management scheme.

In some embodiments, a resource management scheme in accordance with example embodiments of the disclosure may implement a group policy, for example, to enable one or more policies (e.g., for sanitizing freed memory) to be applied across one or more applications such as programs, containers, VMs, and/or the like. In some embodiments, a resource management scheme in accordance with example embodiments of the disclosure may log one or more actions (e.g., freeing resources, sanitizing memory, triggering a trap or debug hook, and/or the like), errors, and/or the like to a system log, user application, and/or the like. In some embodiments, a resource management scheme in accordance with example embodiments of the disclosure may operate across any number of computational devices having any amount and/or type of computational device resources.

This disclosure encompasses numerous inventive principles relating to managing resources for computational devices. The principles disclosed herein may have independent utility and may be embodied individually, and not every embodiment may utilize every principle. Moreover, the principles may also be embodied in various combinations, some of which may amplify some benefits of the individual principles in a synergistic manner. For example, some embodiments may, based on tracking one or more computational resources allocated to one or more applications, implement multiple complementary features such as freeing resources, sanitizing freed memory, cancelling queued requests, and/or completing outstanding requests for an exited application.

For purposes of illustration, some embodiments may be described in the context of a computational storage (CS) architecture, programming model, computational storage API, and/or the like provided by the Storage Networking Industry Association (SNIA) and/or a storage protocol such as Nonvolatile Memory Express (NVMe) NVMe over fabric (NVMe-oF), Compute Express Link (CXL), and/or the like. However, the principles are not limited to use with computational storage, SNIA architectures, programming models, and/or APIs, NVMe, NVMe-oF, CXL protocols, or any other implementation details disclosed herein and may be applied to any computational schemes, systems, methods, apparatus, devices, and/or the like.

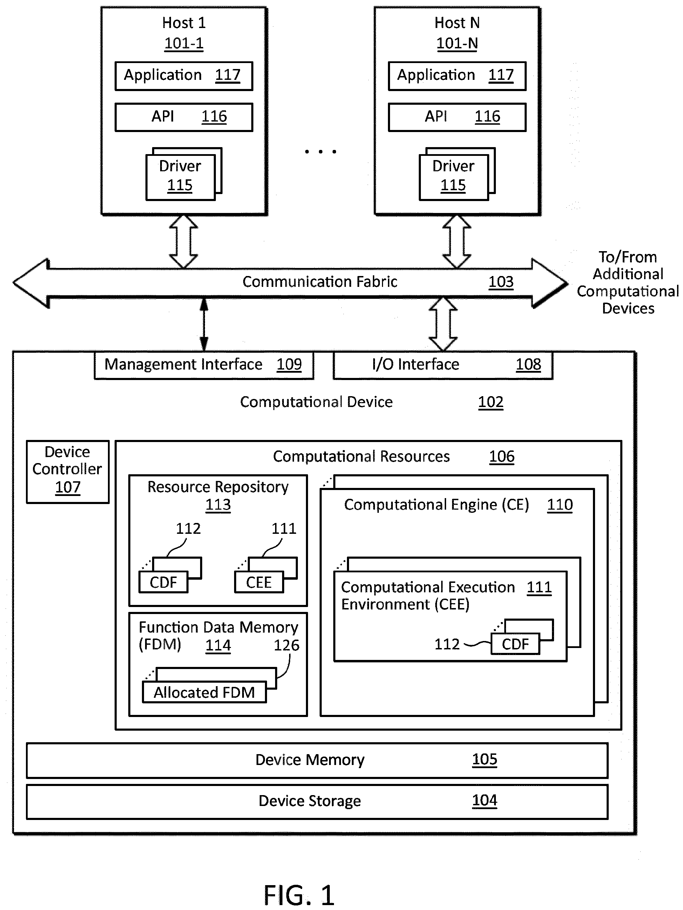

Fig. 1 illustrates an embodiment of a computational device scheme in accordance with example embodiments of the disclosure. The embodiment illustrated in Fig. 1 may include one or more hosts 101-1, ..., 101-N (which may be referred to individually or collectively as 101) and one or more computational devices 102 connected through a communication fabric 103. A host 101 may include one or more device drivers (e.g., computational device drivers) 115. A device driver 115 may enable a host 101 to interact with a corresponding computational device 102. In some embodiments, an API 116 may provide an interface (e.g., an abstracted interface) that may enable a host 101 to access one or more computational resources of a computational device 102 as described below. For example, an API 116 may provide one or more mechanisms to discover, configure, and/or allocate computational resources of a computational device 102.

A computational device 102 may include device storage 104, device memory 105, computational resources 106, a device controller 107, an input and/or output (I/O or IO) interface 108, and/or a management interface 109.

The computational resources 106 may include one or more computational engines (CEs) 110 which may provide (e.g., run) one or more computational execution environments (CEEs) 111, which in turn may execute (e.g., run) one or more computational device functions (CDFs) 112. The computational resources 106 may also include a resource repository 113 that may include one or more computational device functions 112 and/or one or more computational execution environments 111 that have not been allocated. The computational resources 106 may also include a function data memory (FDM) 114.

Examples of the one or more computational engines 110 may include a central processing unit (CPU) such as a complex instruction set computer (CISC) processor (e.g., an x86 processor) and/or a reduced instruction set computer (RISC) processor such as an ARM processor, a graphics processing unit (GPU), a field programmable gate array (FPGA), an application specific circuit (ASIC), a neural processing unit (NPU), a tensor processing unit (TPU), a data processing unit (DPU) and/or the like, or any combination thereof.

Examples of the one or more computational execution environments 111 may include an operating system (e.g., Linux), a sandbox and/or virtual machine within an operating system (e.g., an Extended Berkeley Packet Filter (eBPF) environment), a container, a container platform (e.g., a container engine), a bitstream environment (e.g., a bitstream environment for an FPGA), and/or the like, or any combination thereof.

Examples of the computational device functions 112 may include any type of accelerator function, compression and/or decompression, database filter, encryption and/or decryption, erasure coding, regular expressions (RegEx), scatter-gather, hash calculations, cyclic redundancy check (CRC), data deduplication, redundant array of independent drives (RAID), and/or the like, or any combination thereof. In some embodiments, computational device functions 112 may be provided by the computational device 102, downloaded by a host 101, and/or the like, or any combination thereof. For example, in some embodiments, one or more of the computational device functions 112 may be loaded into the device 102 when is it manufactured, shipped, installed, updated, and/or upgraded (e.g., through a firmware update and/or upgrade) and/or the like. In some embodiments, a function may be referred to as a program, for example, in the context of executable computational device functions 112 that may be downloaded.

The embodiment illustrated in Fig. 1 may enable a host 101 to offload processing operations to a computational device 102. For example, in some embodiments, an application 117 running on a host 101 may use an API 116 to request one or more computational resources such as a computational engine 110, a computational execution environment 111 to run on the computational engine 110, and a computational device function 112 to run in the environment. The application 117 may also request an amount of function data memory 114 for use by the computational device function 112.

If the requested resources are available, the API 116 may allocate the requested resources to the application 117. For example, the API 116 may allocate an entire physical computational engine 110 to the application 117. Alternatively, or additionally, the API 116 may allocate to the application 117 a time-shared portion of a physical computational engine 110, a VM running on the computational engine 110, and/or the like. As another example, the API 116 may allocate a portion of the function data memory 114 (indicated as allocated FDM 126) to the application for use by the allocated computational engine 110 and/or computational execution environment 111.

In some embodiments, the resource repository 113 may include a reference copy of the one or more computational execution environments 111 and/or one or the more computational device functions 112. To allocate a computational execution environment 111 or a computational device function 112 to the application 117, the API 116 may instantiate (e.g., create a working copy of) the reference copy of the computational execution environment 111 or computational device function 112 and load it into the allocated computational engine 110 and/or computational execution environment 111.

In some embodiments, the function data memory 114 may be implemented with memory that may be separate from the device memory 105. Alternatively, or additionally, the function data memory 114 may be implemented at least partially with device memory 105. To the extent that the function data memory 114 may be implemented with device memory 105, the function data memory 114 may include a data structure (e.g., a mapping table) that may enable the API 116, the application, an allocated computational engine 110, an allocated computational execution environment 111, an allocated computational device function 112, and/or the like, to determine which portion of the device memory 105 has been allocated to the application 117.

The device memory 105 and/or function data memory 114 may be implemented with volatile memories such as dynamic random access memory (DRAM) and/or static random access memory (SRAM), nonvolatile memory including flash memory, persistent memory such as cross-gridded nonvolatile memory, memory with bulk resistance change, phase change memory (PCM), and/or the like, or any combination thereof.

The one or more hosts 101 may be implemented with any component or combination of components that may utilize the computational resources 106 of the computational device 102. For example, a host 101 may be implemented with one or more of a server such as a compute server, a storage server, a network server, a cloud server, and/or the like, a node such as a storage node, a computer such as a workstation, a personal computer, a tablet, a smartphone, and/or the like, or multiples and/or combinations thereof.

The one or more devices 102 may be implemented with one or more of any type of device such as an accelerator device, a storage device (e.g., a computational storage device), a network device (e.g., a network interface card (NIC)), a memory expansion and/or buffer device, a graphics processing unit (GPU), a neural processing unit (NPU), a tensor processing unit (TPU), and/or the like, or multiples and/or combination thereof. In some embodiments, a computational storage device may be implemented as a computational storage drive (CSD), a computational storage processor (CSP), and/or a computational storage array (CSA).

The device controller 107 may be implemented with any type of controller that may be adapted to the type of computational device 102. For example, if a computational device 102 is implemented as an SSD, the device controller 107 may be implemented as a storage device controller that may include a flash translation layer (FTL).

The management interface 109 may include any type of functionality to discover, monitor, configure, and/or update the computational device 102. For example, in an embodiment in which the computational device 102 communicates using an NVMe protocol, the management interface 109 may implement an NVMe Management Interface (NVMe-MI) protocol.

The communication fabric 103 may be implemented with one or more interconnects, one or more networks, a network of networks (e.g., the internet), and/or the like, or a combination thereof, using any type of interface and/or protocol. For example, the fabric 103 may be implemented with Peripheral Component Interconnect Express (PCIe), NVMe, NVMe-over-fabric (NVMe-oF), Ethernet, Transmission Control Protocol/Internet Protocol (TCP/IP), Direct Memory Access (DMA) Remote DMA (RDMA), RDMA over Converged Ethernet (ROCE), FibreChannel, InfiniBand, Serial ATA (SATA), Small Computer Systems Interface (SCSI), Serial Attached SCSI (SAS), iWARP, Compute Express Link (CXL), and/or a coherent protocol such as CXL.mem, CXL.cache, CXL.IO and/or the like, Gen-Z, Open Coherent Accelerator Processor Interface (OpenCAPI), Cache Coherent Interconnect for Accelerators (CCIX), and/or the like, Advanced eXtensible Interface (AXI), any generation of wireless network including 2G, 3G, 4G, 5G, 6G, and/or the like, any generation of Wi-Fi, Bluetooth, near-field communication (NFC), and/or the like, or any combination thereof. In some embodiments, the communication fabric 103 may include one or more switches, hubs, nodes, routers, and/or the like.

For example, in an embodiment in which the computational device 102 may be implemented as a storage device, the I/O interface 108 may implement a storage protocol such as NVMe that may enable the host 101 and the computational device 102 to exchange commands, data, and/or the like, over the communication fabric 103.

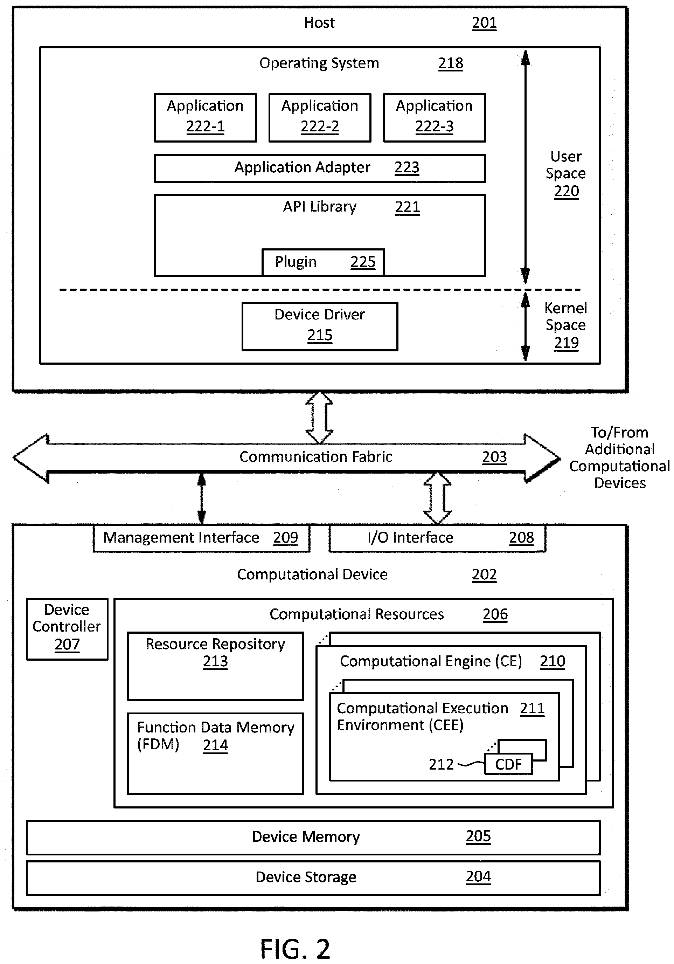

Fig. 2 illustrates an embodiment of an architecture for a computational device in accordance with example embodiments of the disclosure. Although not limited to any specific usage, the architecture illustrated in Fig. 2 may be used, for example, with the computational device scheme and/or components illustrated in Fig. 1. In some aspects, one or more of the elements illustrated in Fig. 2 may be similar to corresponding elements in Fig. 1 and may be indicated by reference numbers ending in the same digits.

Referring to Fig. 2, the API architecture may be implemented using an operating system (OS) 218 running on a host 201 that may communicate with a computational device 202 using a communication fabric 203. The operating system 218 may include a kernel space 219 and a user space 220.

An API library 221 and one or more applications 222-1, 222-2, and/or 222-3 (which may be referred to individually or collectively as 222) may run in the user space 220. Examples of the one or more applications 222 may include storage applications, cloud computing applications, data analysis applications, and/or the like. In some embodiments, an application adapter 223 may run in the user space 220 and convert inputs and/or outputs between applications 222 and/or between one or more applications 222 and the API library 221.

A device driver 215 may run in the kernel space 219 and may provide a software interface that may enable the OS 218, an application 222, the API library 221, and/or the like, to access one or more hardware features of the computational device 202. Thus, in some embodiments, the device driver 215 may partially or entirely manage the computational device 202 for the OS 218.

In some embodiments, a plugin 225 may run in the user space 220 and enable the API library 221 and/or an application 222 to communicate with the computational device 202 and/or the device driver 215. For example, in some embodiments, the plugin 225 may be implemented with device-specific code that may process a request from an application 222 and/or the API library 221 by mapping (e.g. forwarding) the request to the device driver 215. Thus, in some embodiments, the API library 221 may use different plugins to interface to different device drivers for different types of computational devices and/or interface techniques (e.g., an FPGA plugin, an NVMe plugin, and/or the like). Depending on the implementation details, the plugin 225 may be implemented with relatively simple code that may be readily created by a computational device supplier (e.g., a manufacturer, vendor, and/or the like) to communicate with the computational device and operate within the framework of the API library 221.

Although the embodiment illustrated in Fig. 2 is shown with some specific elements in kernel space 219 and user space 220, in other embodiments, any of the elements may be implemented in a different type of OS space. For example, in some embodiments, some or all of the API library 221 and/or plugin 225 may run partially or entirely in the kernel space 219. Moreover, although the embodiment illustrated in Fig. 2 may only be shown with one host 201 and/or one computational device 202, any number of additional hosts 201 and/or computational devices 202 may be connected through the communication fabric 203, and any of the hosts 201 may access any of the computational devices 202 using the API library 221.

In some embodiments, the API library 221 may provide an interface (e.g., an abstracted interface) that may implement one or more mechanisms to discover, configure, allocate, utilize, and/or the like, computational resources 206 of the computational device 202 to enable the one or more applications to 222 to offload processing operations to the computational device 202. Thus, in some embodiments, the API architecture illustrated in Fig. 2 may be used to enable the application 117 illustrated in Fig. 1 to access the computational resources 106 of the computational device 102 illustrated in Fig. 1.

Referring again to Fig. 2, in some embodiments, one or more of the applications 222 may connect to the computational device 202 through API library 221 which may connect to the device driver 215. Different applications 222 may use the computational device 202 in different manners (e.g., for different use-cases) to offload computational tasks to the computational resources 206 of the computational device 202. Depending on the implementation details, this may improve performance, for example, by providing faster processing, lower latency, and/or the like. In some embodiments, the API library 221 may provide a transparent mechanism that may present an application 222 with the same or a similar interface to the computational device 202, for example, even when communication between the application 222 and the computational device 202 crosses fabric connectivity boundaries.

In some embodiments, however, an application 222 to which one or more of the computational resources 206 has been allocated may behave in a manner that may prevent the resources 206 from being used efficiently. For example, if the application 222 exits unconditionally (e.g., crashes), the application 222 may not free the resources 206 that have been allocated to it. Thus, depending on the implementation details, one or more of the resources 206 that have been allocated to the application 222 (e.g., function data memory 214, one or more computational engines 210, and/or the like) may become unusable by other applications. (In some embodiments, this may be referred to as a stranded resource.)

Moreover, in some embodiments, if an application 222 crashes (e.g., while running a computational device function 212 in a computational execution environment 211 on a computational engine 210), it may leave the computational device function 212, the computational execution environment 211, and/or the computational engine 210 in an indeterminate state, and therefore, not usable by other applications.

As a further example, established programming practices for an application 222 may include freeing, prior to termination of the application (or as part of an exit procedure), resources that have been allocated to the application. However, in some embodiments, the API library 221 or an operator of the host 201 may not be able to impose specific programming practices on an application 222. Thus, even if an application 222 exits conditionally (e.g., performs a normal or controlled exit), the application 222 may not free, prior to exiting (or during an exit procedure), one or more resources that were allocated to it. Therefore, the resources allocated to the application 222 may become unusable by other applications after the application 222 exits.

In some embodiments, memory resources may be especially susceptible to the potential problems described above. Memory that is allocated to an application 222 may be marked by the API library 221 as being in use (e.g., indicated as allocated FDM). If the application 222 does not free the memory prior to or during exit (whether conditional or unconditional), the allocated memory may become unusable by other applications, thereby creating one or more memory holes. Eventually, this may deny access to enough (e.g., most or all) of the function data memory 214 and/or device memory 205 that it may render the computational device 202 unusable.

An additional potential inefficiency may arise when an application 222 exits (e.g., conditionally or unconditionally) while a request (e.g., an NVMe command) is queued (e.g., awaiting processing in a submission queue) and/or pending (e.g., currently being processed). In such a situation, the computational resources 206 may not be aware that the application 222 has exited and therefore may begin and/or continue processing the request, thereby wasting resources.

Any of these potential problem situations may result in a denial of service by the computational device 202 because resources may be consumed by one or more applications to which they have been allocated, even though the resources may not be in use. In some embodiments, recovering one or more of the unusable resources may involve a software reset of the computational device 202, a system reset (e.g., a total system reset), and/or the like. However, resetting the computational device 202 may be disruptive to one or more other applications 222, hosts 201, computational devices 202, and/or the like. Moreover, the API library 221 and/or any standard (e.g., SNIA), protocol (e.g., NVMe), and/or the like, may not provide a mechanism to reset the computational device 202. Although some standards and/or protocols may provide one or more mechanisms to enable an API (e.g., an API library) and/or computational device to discover, allocate, configure, and/or manage resources, they may not provide a mechanism to manage (e.g., free) resources based on a manner in which an application may use a resource after the resource is allocated.

In some embodiments, one or more of these potential problem situations may increase the difficulty of debugging an application 222 (e.g., during proof-of-concept (PoC) bring-up). Moreover, in some embodiments, one or more of these potential problem situations may result in data (e.g., sensitive or confidential data) from an application 222 remaining in allocated function data memory, a queue, and/or the like. Depending on the implementation details, this may present a security risk.

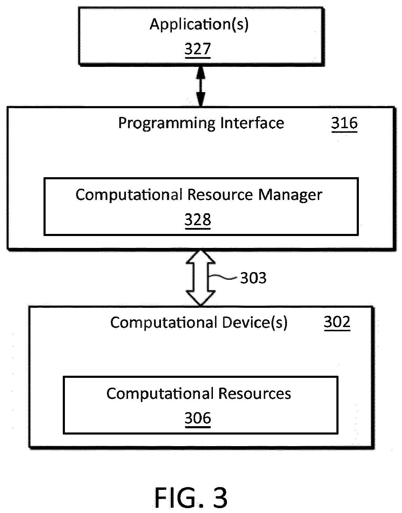

Fig. 3 illustrates an embodiment of a resource management scheme for a computational device in accordance with example embodiments of the disclosure. The embodiment illustrated in Fig. 3 may include one or more computational devices 302, one or more applications 327, a programming interface 316, and/or a computational resource manager 328. In some embodiments, the computational resource manager 328 may be included, at least partially, in the programming interface 316 (e.g., as part of an API library). In some other embodiments, however, the computational resource manager 328 may be separate from the programming interface 316. For example, in some embodiments, the computational resource manager 328 may be included, at least partially, in the one or more computational devices 302. The one or more computational devices 302 may communicate with the programming interface 316 and/or the one or more applications 327 through a communication fabric 303.

In some embodiments, the computational resource manager 328 may track one or more resources 306 of the one or more computational devices 302, for example, after one or more resources 306 of the one or more computational devices 302 have been allocated to an application 327. Depending on the implementation details, this may enable the computational resource manager 328 to determine a usage of the one or more resources 306 by the application 327. In some embodiments, based on a usage of one or more resources 306 by an application 327, the computational resource manager 328 may perform one or more actions to manage the computational resources 306.

Additionally, or alternatively, the computational resource manager 328 may track one or more resources of one or more hosts on which the one or more applications 327 may run, for example, after one or more resources of one or more hosts have been allocated to an application 327 and perform one or more actions to manage the one or more resources of the one or more hosts based on a usage of the one or more resources of the one or more hosts by the application 327.

For example, in some embodiments, the computational resource manager 328 may determine that an application (e.g., a program, a container, a VM, and/or the like) may have terminated (e.g., may have exited conditionally or unconditionally, may have become frozen, or otherwise become nonresponsive and/or ceased working, at least partially) without freeing one or more resources that had been allocated to the application, thereby rendering the one or more resources unusable. Based on this type of condition, the computational resource manager 328 may free (e.g., deallocate) at least some of the one or more unusable resources so they may be used by another application.

As another example, the computational resource manager 328 may determine that an application may have terminated while one or more requests from the application is queued and/or outstanding. Based on this type of condition, the computational resource manager 328 may cancel one or more queued requests and/or complete one or more outstanding requests. For example, if an application 327 has submitted a command to a submission queue (e.g., an NVMe submission queue), and the application terminates before a computational device 302 to which the command was directed began processing the request (e.g., the request is still present in the submission queue), the computational resource manager 328 may cancel the request, for example, by removing the quest from the queue and/or notifying the application. As another example, if an application 327 has submitted a command to a submission queue (e.g., an NVMe submission queue), and the application terminates after a computational device 302 to which the command was directed began processing the request but before the computational device 302 has finished processing the request (e.g., the request has been read from the submission queue, but a corresponding completion has not been placed in a completion queue), the computational resource manager 328 may complete the request (e.g. with an error status), for example, by placing a corresponding completion in a completion queue.

As a further example, based on determining that an application may have terminated without freeing allocated resources, clearing queued requests, clearing outstanding requests, and/or the like, the computational resource manager 328 may execute a policy (e.g., a group policy) that may sanitize one or more memory resources associated with the application. For example, the computational resource manager 328 may sanitize (e.g., fill with a predetermined data value) the contents of any device memory and/or function data memory that may have been allocated to the terminated application, as well as any queues, buffers, and/or the like, that may contain information of the terminated application.

In some embodiments, the computational resource manager 328 may track one or more exceptions associated with an application, for example, by implementing a trap mechanism to gain control of the application when it fails. Depending on the implementation details, this may enable an exception handler associated with the trap to free resources that have been allocated to the application.

In some embodiments, the computational resource manager 328 may implement a debug hook to track one or more resources that have been allocated to an application. For example, the computational resource manager 328 may load profiling code (e.g., when an application is loaded) that may help understand and/or manage the usage or resources by the application based on trapping one or more code execution points.

In some embodiments, any of the features implemented by the computational resource manager 328 may be implemented independently of any of the other features. Thus, the computational resource manager 328 may implement resource tracking without a trap and/or debug hook mechanism and vice-versa. However, some embodiments may combine one or more of the possible features of the computational resource manager 328 to achieve synergistic results.

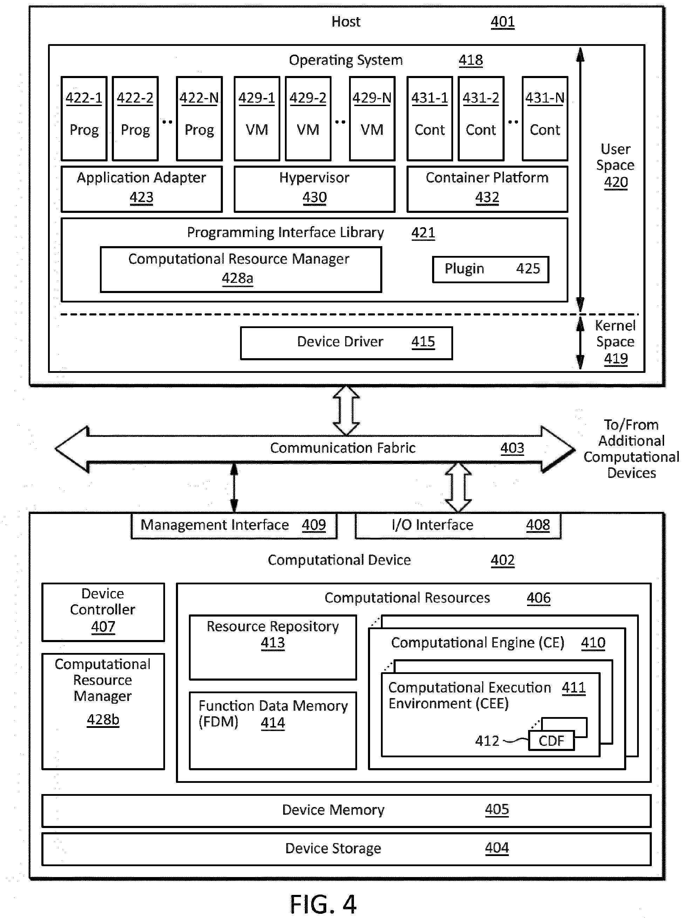

Fig. 4 illustrates some example implementation details for an embodiment of a resource management scheme for a computational device in accordance with example embodiments of the disclosure. The embodiment illustrated in Fig. 4 may be used, for example, to implement the embodiment illustrated in Fig. 3. In some aspects, the embodiment illustrated in Fig. 4 may include some elements that may be similar to corresponding elements in Fig. 1 and Fig. 2 may be indicated by reference numbers ending in the same digits. The example implementation details described with respect to Fig. 4 are for purposes of illustration, and some embodiments may not include all or any of the example implementation details illustrated in Fig. 4.

The embodiment illustrated in Fig. 4 may include one or more hosts 401 and one or more computational devices 402 having computational resources 406. The one or more hosts 401 and one or more computational devices 402 may communicate using a communication fabric 403. A host 401 may include an operating system 418 having a kernel space 419 and/or a user space 420.

A programming interface library 421 may run in the user space 420 along with one or more types of applications and/or accompanying support components (e.g., application adapters). For example, one or more programs 422-1, 422-2, ..., 422-N (which may be referred to individually or collectively as 422) may interface directly to the programming interface library 421 and/or through an application adapter (e.g., a program adapter) 423. As another example, one or more VMs 429-1, 429-2, ...,429-N (which may be referred to individually or collectively as 429) may interface directly to the programming interface library 421 and/or through a hypervisor 430. As a further example, one or more containers 431-1, 431-2, ...,431-N (which may be referred to individually or collectively as 431) may interface directly to the programming interface library 421 and/or through a container platform (e.g., a container engine) 432.

A first portion of a computational resource manager 428a may be included, at least partially, in user space 420, for example as part, at least partially, of the programming interface library 421 as illustrated in Fig. 4. A second portion of the computational resource manager 428b may be included, at least partially, in a computational device 402 as illustrated in Fig. 4. The first portion of the computational resource manager 428a and the second portion of the computational resource manager 428b may be referred to individually or collectively as a computational resource manager 428. In some embodiments, any portion of a computational resource manager 428 may be implemented (e.g., run) in any suitable location, for example, anywhere in kernel space 419 (e.g., as part of a device driver, a service, and/or the like), anywhere in user space 420 (e.g., as part of a library, an application, an application adapter, and/or the like), and/or anywhere in a computational device 402 or other device communicating through network fabric 403.

In some embodiments, the computational resource manager 428 may track and/or manage computational resources 406 of the one or more computational devices 402 at different levels. For example, in some embodiments, computational resources 406 may be tracked at the level of individual programs 422, for example, to prevent one application from rendering resources 406 unusable by another application, to prevent confidential data of one application from being accessed by another application, and/or the like.

As another example, in some embodiments, computational resources 406 may be tracked and/or managed at the level of a VM. This may be useful, for example, where one or more applications running on a VM 429 may need to access data from one or more other applications running on the VM 429. Thus, the computational resource manager 428 may free, when a VM 429 shuts down, resources 406 that may have been allocated to the VM 429 and/or one or more applications running on the VM 429. In some embodiments, when a VM 429 shuts down, the computational resource manager 428 may clear (e.g., cancel and/or complete) one or more requests that may be queued and/or pending from one or more applications running on the VM 429.

As a further example, in some embodiments, computational resources 406 may be tracked and/or managed at the level of a container 431 and/or a container platform (e.g., a container engine) 432. This may be useful, for example, where one or more applications running in a container 431 or a container platform 432 may need to access data from one or more other applications running in the container 431 and/or container platform 432. Thus, the computational resource manager 428 may free, when a container 431 and/or container platform 432 stops, resources 406 that may have been allocated to the container 431, container platform 432, and/or one or more applications running in the container 431 and/or container platform 432. In some embodiments, when a container 431 or a container platform 432 stops, the computational resource manager 428 may clear (e.g., cancel and/or complete) one or more requests that may be queued and/or pending from one or more applications running in the container 431 and/or container platform 432.

In some embodiments, computational resources 406 may be tracked and/or managed at any combination of levels. For example, in some embodiments, computational resources 406 for one or more applications running in a first VM 429-1 may be tracked and/or managed at the application level (e.g., individually), while computational resources 406 for one or more applications running in a second VM 429-2 may be tracked and/or managed at the VM level (e.g., collectively).

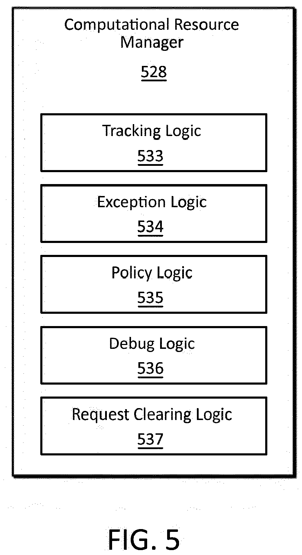

Fig. 5 illustrates an embodiment of a computational resource manager in accordance with example embodiments of the disclosure. The embodiment illustrated in Fig. 5 may be used, for example, to implement a computational resource manager 428 as described with respect to Fig. 4, and may be described with reference to some components of the scheme illustrated in Fig. 4. The computational resource manager 528 illustrated in Fig. 5 is not limited to any specific implementation details. However, for purposes of illustration, a computational resource manager 528 may any number of the following types of logic to implement any number of the following features.
(1) In some embodiments, a computational resource manager 528 may include tracking logic 533 to track device and/or host computational resources 406 allocated to one or more applications. For example, in some embodiments, in response to a resource request from an application, a programming interface library 421 may return the requested resources to the application and/or allocate a handle to identify the resources. A handle may include, for example, details of the resource such as a device handle, a memory segment handle, and/or the like. In some embodiments, a programming interface library 421 may maintain a list or other data structure to track resources any computational resources 406 across one or more computational devices 402. For example, when one or more resources are allocated to an application, the programming interface library 421 may add a handle for the resources to the list, and when one or more resources are freed (e.g., by an application), the programming interface library 421 may remove the corresponding handle from the list.

Such a list of tracked resources may be maintained, for example, by an existing API library (e.g., a SNIA computational storage API), and may be used and/or adapted by a computational resource management scheme in accordance with example embodiments of the disclosure to track computational resources 406 that the computational resource manager 528 may free, for example, when an application or other application terminates (conditionally or unconditionally) without freeing computational resources 406 that may have been allocated to it. Thus, in some embodiments, and depending on the implementation details, a computational resource management scheme in accordance with example embodiments of the disclosure may be integrated into an existing API in a synergistic manner.

In some embodiments of tracking logic 533, computational resources 406 may be tracked using any number of the following techniques. (a) An allocated device memory range may be tracked and/or represented by an offset (e.g., of a starting address or other location) and an amount of memory (e.g., a number of bytes allocated). A memory range may be derived, for example, from one or more memory devices that a computational device 402 may expose. (b) A computational resource such as a computational engine 410 (e.g., a CPU, an FPGA, a GPU, an ASIC, a DPU, and/or the like) may be tracked based on a managed state, for example, active, inactive, powered-off, and/or the like. (c) A memory resource (e.g., a private memory resource in host memory, device memory, function data memory, and/or the like) may be tagged, for example, by one or more modules in a path (e.g., a path including a plugin) of a programming interface library 421 that may store additional context information that may create memory holes if not freed. (d) A computational device function (CDF) 412 may be tracked, for example, based on a source of the function (e.g., whether the function is built-in, or downloaded, to the computational device 402). In some embodiments, a handle for a computational device function 412 may include information, for example, on a source, state, queued IOs, outstanding IOs, configurations, errors, and/or the like, of the computational device function 412.

In some embodiments of tracking logic 533, tracking of computational resources 406 may be performed on a per computational device handle basis. Multiple handles may provide individual tracking details (e.g., by resource) where an opaque handle may map back to the actual resource. Tracking one or more (e.g., all) computational resources may provide details that may enable a computational resource manager 528 to free resources allocated to applications or other applications that may terminate (e.g., conditionally or unconditionally) without freeing all of their allocated resources.

(2) In some embodiments, a computational resource manager 528 may include exception logic 534 that may implement one or more trap mechanisms to track application exceptions, for example, on unclean (e.g., unconditional) exits. In some embodiments, exception logic 534 may install an exception handler (e.g., during initialization of the programming interface library 421. The exception handler may gain control of an application when it fails. In some embodiments, installing an exception handler may include subscribing to an operating system's signaled exception handlers.

The types of signaled exception handlers may depend on the type of operating system. For example, with some operating systems, one or more exception handlers that may be installed may enable the exception logic 534 to gain control of an application based on one or more different types of definitions of a crash. In some embodiments, once installed, some exception handlers may transfer control of an application's state before the application terminates. In such an embodiment, implementing an exception window before termination of an application may enable the exception logic 534 to free computational device resources 406 that have been allocated, but not freed by, to the application.

In some embodiments, the programming interface library 421 may be implemented, at least partially, as a module that a program 422 and/or other application may link into. Thus, the programming interface library 421 may load before the application, and a trap (e.g., an execution handler) implemented by the programming interface library 421 may be called before any trap loaded by the program 422 and/or other application because, for example, a trap installed by the exception logic 534 may be implemented as a system trap rather than an application trap.

(3) In some embodiments, a computational resource manager 528 may include policy logic 535 (e.g., group policy logic) that may clear some or all memory resources that may be freed by the computational resource manager 528. Depending on the implementation details, this may facilitate sanitizing (e.g., for security purposes), the contents of host memory, device memory 405, function data memory 414, and/or the like that may have been allocated to an application, and/or freed by a computational resource manager 528. For example, if an application is terminated (e.g., an application crashes and exits unconditionally), the application's data may remain in one or more memory resources that were allocated to the application but not deleted, overwritten, or otherwise sanitized, and not freed by the application prior to termination. The data remaining in the one or more memory resources may represent a security risk, for example, if an unauthorized application or other user gains access to the one or more memory resources. In some embodiments, policy logic 535 may implement a policy that may sanitize one or more memory resources of a terminated application, for example, before the computational resource manager 528 may return the one or more memory resources to a memory pool in the computational resources 406. In some embodiments, Sanitization may involve filling the memory being freed with a repeating data pattern, for example, all zeroes. In some embodiments, policy logic 535 may implement a policy in which sanitization may be applied when memory is allocated, for example after an application requests the memory resources, but before the memory resources are returned to the application.

(4) In some embodiments, a computational resource manager 528 may include debug logic 536 that may implement one or more debug hooks. For example, debug logic 536 may load one or more pieces of profiling code that may be used to observe and/or understand the flow of application code and/or computational resources at various points in application code based on reaching one or more traps (e.g., debugging hooks) at the various points in the application code. As compared to an execution trap which may inform a computational resource manager 528 that a trap occurred, a debug hook may inform the debug logic 536 that the trap occurred in a certain part of the code.

Depending on the implementation details, this may facilitate tracking and/or freeing of resources by a computational resource manager 528 that may have been allocated to an application. For example, if an application was executing a three-layered pipelined data processing algorithm, and the three layers of data became compromised (e.g., due to a crash), a debugging hook may execute profiling code that may enable the application and/or the debug logic 536 to determine that the data processing of all three layers may be reversed to eliminate the compromised data. Depending on the implementation details, this may help the computational resource manager 528 track one or more computational resources 406 of one or more computational devices 402 that may have been allocated to the application.

(5) In some embodiments, a computational resource manager 528 may include request clearing logic 537 that may determine that an application may have terminated while one or more requests from the application to one or more computational devices 402 are queued and/or outstanding. For example, if an application terminates with a request still in a submission queue, the request clearing logic 537 may cancel the request. As another example, if an application terminates while a request is being processed by one or more computational resources 406 of one or more computational devices 402, the request clearing logic 537 may complete the request (e.g., with an error status) by placing a corresponding completion in a completion queue. In an embodiment in which a submission and/or completion queue may be implemented with NVMe queues, an NVMe subsystem may automatically place an error in the completion queue in response to the request clearing logic 537 cancelling the request.

In any of the embodiments disclosed herein, any of the computational resources (e.g., 106, 206, 306, and/or 406) may be implemented using one or more namespaces (e.g., NVMe namespaces). For example, in some embodiments, one or more (e.g., each) of the computational engines (e.g., 110, 210, and/or 410) may be configured to operate with, or as, a corresponding computational namespace. Depending on the implementation details, the use of namespaces may facilitate implementation of a computational resource manager in accordance with example embodiments of the disclosure in a virtualized environment. For example, one or more (e.g., each) of the VMs 429 illustrated in Fig. 4 may be configured to use a different namespace.

As mentioned above, any of the computational resource managers 328, 428, and/or 528 may be implemented at one or more hosts, one or more computational devices, or any combination thereof. For example, in some embodiments, a computational resource manager may be implemented entirely, or almost entirely at a host. In such an embodiment, any or all of the logic described with respect to Fig. 5 may be implemented by a computational resource manager (e.g., 328, 428, and/or 528) that may be included, at least partially within a programming interface and/or programming interface library (e.g., 316 and/or 421) which may be located between one or more applications (e.g., 327, 422, 429, 430, 431, and/or 432) and one or more computational devices (e.g., 102, 202, 302, and/or 402). In such an embodiment, the computational resource manager may manage some or all of the computational resources (e.g., 106, 206, 306, and/or 406), set debugging hooks and/or trap mechanisms for applications (e.g., for when applications terminate (e.g., conditionally or unconditionally) become frozen, or otherwise become nonresponsive and/or ceased working, at least partially. The computational resource manager may also track some or all allocations of computational resources for some or all applications and/or computational devices and free resources that may have been allocated to an application and/or clear requests submitted by an application, for example, when an application terminates.

However, in some embodiments, one or more portions of the functionality of a computational resource manager (e.g., portion 428b illustrated in Fig. 4) may be implemented in one or more computational devices 402. For example, in some embodiments, a portion of a computational resource manager 428b implemented at a computational device 402 may, at least partially, perform discovery, configuration, allocation, tracking, freeing, and/or the like of some or all of the computational resources 406 of a computational device 402 for one or more applications such as programs 422, VMs 429, and/or containers 431. In some embodiments, this may be described as offloading additional processing from a host 401 to a computational device 402. Depending on the implementation details, a computational device 402 may be able to implement one or more of the features of a computational resource manager 428 more efficiently than a host 401.

In an embodiment in which a computational resource manager 428 may be implemented at least partially at a computational device 402, a portion of a computational resource manager 428b may perform one or more operations to support the computational resource management performed at the computational device 402. However, depending on the implementation details, a portion of a computational resource manager 428b that is implemented at a computational device 402 may not be aware of an operating system environment at a host 401, multi-tenancy at a host 401, a context of an application that may be connected through a programming interface 421 to the computational device 402 and/or the like. Moreover, if some portion of a computational resource manager 428b is implemented at a computational device 402, one or more trap mechanisms and/or debug hooks may be implemented at a host 401. Thus, in some embodiments, any number of these features may be offloaded to a portion of a computational resource manager 428b that is implemented at a computational device 402. For example, in some embodiments, a computational device 402 may be connected into the host and/or host operating system context, application context (e.g., program context), and/or the like. Thus, for example, a programming interface library 421 may provide, to a computational resource manager 428b at a computational device 402, a context for an application along with instructions and/or a request to allocate one or more resources 406 of the computational device 402 to the application. In some embodiments, a context may include one or more elements that may run in or utilize a computational execution environment 411 such as one or more computational device functions 412, one or more memory resources (e.g., device memory 405, allocated FDM 426, and/or the like).

Table 1 illustrates an example embodiment of pseudocode that may be used to track one or more computational resources in accordance with example embodiments of the disclosure. The embodiment illustrated in Table 1 may be used, for example, to implement any of the computational resource managers disclosed herein. For example, the pseudocode illustrated in Table 1 may be called by a computational resource manager to add one or more resources to a tracking list when it is allocated to an application such as a program.

Table 2 illustrates an example embodiment of pseudocode that may be used to track one or more computational resources in accordance with example embodiments of the disclosure. The embodiment illustrated in Table 2 may be used, for example, to implement any of the computational resource managers disclosed herein. For example, the pseudocode illustrated in Table 2 may be called by a computational resource manager to free and/or remove one or more resources from a tracking list, for example, when an application such as a program terminates (e.g., crashes). In some embodiments, the pseudocode may also be called when an application exits normally. For example, operating system hooks may be installed to trap the exit which in turn may call unwind().

For purposes of illustration, the pseudocode illustrated in Table 1 and Table 2 may be described in the context of a Computational Storage API provided by SNIA in which CSx may refer to a computational storage device (e.g., a computational storage processor (CSP), a computational storage drive (CSD), and/or a computational storage array (CSA)), CSF may refer to a computational storage function, CSE may refer to a computational storage engine, and CSEE may refer to a computational storage execution environment, but the inventive principles may be applied to any other type of resource management scheme for any type of computational devices.

**Table 1**

| | /* pseudo-code to track CS device resources */ |
|---|---|
| 1 | track () |
| 2 | { |
| 3 | For each OpenCSx request |
| 4 | Create CSx tracking list |
| 5 | Add CSx handle to head of list |
| 6 | For each Open/allocate request |
| 7 | Create handle and attach to CSx tracking list |
| 8 | Track parent/child relationships |
| 9 | If memory resource |
| 10 | Track resource in memory sub-list |
| 11 | If compute resource |
| 12 | track resource in compute sub-list |
| 13 | If management state |
| 14 | Track state in sub-list |
| 15 | If CSF resource |
| 16 | Track resource in sub-list |
| 17 | If free resource request |
| 18 | Lookup handle in tracking list |
| 19 | Free resource and remove handle from list |
| 20 | free handle |
| 21 | } |

**Table 2**

| | /* pseudo-code to free allocated resources */ |
|---|---|
| 1 | unwind ( ) |
| 2 | { |
| 3 | Call plugin handler LibNotify(CS_LIB_SHUTTING_DOWN) |
| 4 | |
| 5 | |
| 6 | |
| 7 | For each open handle (MRU) |
| 8 | Call appropriate close/free interface |
| 9 | Free associated private data (if not freed) // this may be tedious |
| 10 | /* Closing handles through the plugin should trigger |
| 11 | Freeing device memory in driver |
| 12 | Freeing other device resources |
| 13 | Returning device state for CSx/CSE/CSEE/CSF */ |
| 14 | Call plugin Shutdown handler |
| 15 | Log any errors in path into systemlog |
| 16 | } |

In some embodiments, a computational resource management scheme in accordance with example embodiments of the disclosure may track computational device resources transparently, e.g., within a programming interface (e.g., an API) library. Depending on the implementation details, such a scheme may be implemented without requiring additional programming interfaces. Depending on the implementation details, a computational resource management scheme in accordance with example embodiments of the disclosure may enable scaling currently existing functions and/or functions that may be developed in the future to run on a computational device that may include one or more computational resources such as one or more compute engines. In some embodiments, a computational resource management scheme in accordance with example embodiments of the disclosure may assist a host and/or application in scheduling jobs.

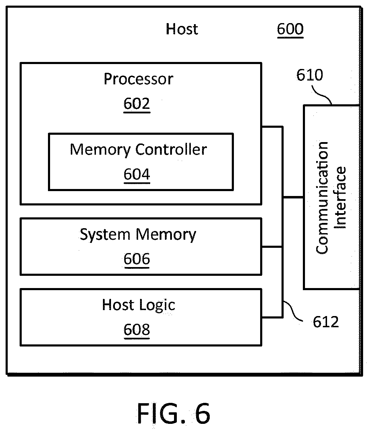

Fig. 6 illustrates an example embodiment of a host apparatus in accordance with example embodiments of the disclosure. The host apparatus illustrated in Fig. 6 may be used, for example, to implement any of the hosts disclosed herein. The host apparatus 600 illustrated in Fig. 6 may include a processor 602, which may include a memory controller 604, a system memory 606, host logic 608, and/or communication interface 610. Any or all of the components illustrated in Fig. 6 may communicate through one or more system buses 612. In some embodiments, one or more of the components illustrated in Fig. 6 may be implemented using other components. For example, in some embodiments, the host control logic 608 may be implemented by the processor 602 executing instructions stored in the system memory 606 or other memory. In some embodiments, the host logic 608 may implement any of the host functionality disclosed herein including, for example, any of the functionality of a computational resource manager.

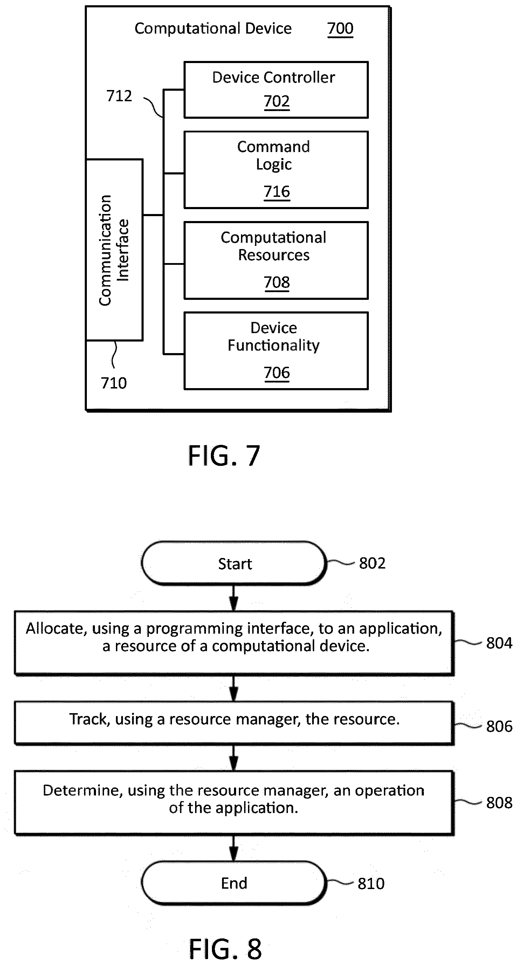

Fig. 7 illustrates an example embodiment of a computational device that may be used to provide a user with access to one or more computational resources through a programming interface in accordance with example embodiments of the disclosure. The embodiment 700 illustrated in Fig. 7 may be used, for example, to implement any of the computational devices disclosed herein. The computational device 700 may include a device controller 702, one or more computational resources 708, command logic 716, a device functionality circuit 706, and a communication interface 710. The components illustrated in Fig. 7 may communicate through one or more device buses 712.

The device functionality circuit 706 may include any hardware to implement the primary function of the device 700. For example, if the device 700 is implemented as a storage device, the device functionality circuit 706 may include a storage medium such as one or more flash memory devices, an FTL, and/or the like. As another example, if the device 700 is implemented as a network interface card (NIC), the device functionality circuit 706 may include one or more modems, network interfaces, physical layers (PHYs), medium access control layers (MACs), and/or the like. As a further example, if the device 700 is implemented as an accelerator, the device functionality circuit 706 may include one or more accelerator circuits, memory circuits, and/or the like.

Any of the functionality described herein, including any of the host functionality, device functionally, and/or the like (e.g., the computational resource manager 328, 428, and/or 528) as well as any of the functionality described with respect to the embodiments illustrated in Figs. 1-8) may be implemented with hardware, software, firmware, or any combination thereof including, for example, hardware and/or software combinational logic, sequential logic, timers, counters, registers, state machines, volatile memories such DRAM and/or SRAM, nonvolatile memory including flash memory, persistent memory such as cross-gridded nonvolatile memory, memory with bulk resistance change, PCM, and/or the like and/or any combination thereof, complex programmable logic devices (CPLDs), FPGAs, ASICs, CPUs including CISC processors such as x86 processors and/or RISC processors such as ARM processors, GPUs, NPUs, TPUs, and/or the like, executing instructions stored in any type of memory. In some embodiments, one or more components may be implemented as a system-on-chip (SOC).

Fig. 8 illustrates an embodiment of a method for computational resource management for a computational device in accordance with example embodiments of the disclosure. The method may begin at operation 802. At operation 804, the method may allocate, using a programming interface, to an application, a resource of a computational device. For example, an application may include a program, a VM and/or a program running on the VM, a hypervisor, a container and/or a program running in a container, a container platform, and/or the like. At operation 806, the method may track, using a resource manager, the resource. For example, a resource may include a computational engine, a computational execution environment, a computational device function, memory, and/or the like. At operation 808, the method may determine, using the resource manager, an operation of the application. For example, an operation may include a termination such as a conditional or unconditional exit by an application, a VM shutting down, a container stopping, and/or the like. The method may end at operation 810.

The embodiment illustrated in Fig. 8, as well as all of the other embodiments described herein, are example operations and/or components. In some embodiments, some operations and/or components may be omitted and/or other operations and/or components may be included. Moreover, in some embodiments, the temporal and/or spatial order of the operations and/or components may be varied. Although some components and/or operations may be illustrated as individual components, in some embodiments, some components and/or operations shown separately may be integrated into single components and/or operations, and/or some components and/or operations shown as single components and/or operations may be implemented with multiple components and/or operations.

Some embodiments disclosed above have been described in the context of various implementation details, but the principles of this disclosure are not limited to these or any other specific details. For example, some functionality has been described as being implemented by certain components, but in other embodiments, the functionality may be distributed between different systems and components in different locations and having various user interfaces. Certain embodiments have been described as having specific processes, operations, etc., but these terms also encompass embodiments in which a specific process, operation, etc. may be implemented with multiple processes, operations, etc., or in which multiple processes, operations, etc. may be integrated into a single process, step, etc. A reference to a component or element may refer to only a portion of the component or element. For example, a reference to a block may refer to the entire block or one or more subblocks. A reference to a component or element may refer to one or more of the component or element, and a reference to plural components or elements may refer to a single component or element. For example, a reference to a resource may refer to one more resources, and a reference to resources may refer to a single resource. The use of terms such as "first" and "second" in this disclosure and the claims may only be for purposes of distinguishing the elements they modify and may not indicate any spatial or temporal order unless apparent otherwise from context. In some embodiments, a reference to an element may refer to at least a portion of the element, for example, "based on" may refer to "based at least in part on," and/or the like. A reference to a first element may not imply the existence of a second element. The principles disclosed herein have independent utility and may be embodied individually, and not every embodiment may utilize every principle. However, the principles may also be embodied in various combinations, some of which may amplify the benefits of the individual principles in a synergistic manner. The various details and embodiments described above may be combined to produce additional embodiments according to the inventive principles of this patent disclosure.

Since the inventive principles of this patent disclosure may be modified in arrangement and detail without departing from the inventive concepts, such changes and modifications are considered to fall within the scope of the following claims.

## Claims

1. A method comprising:
allocating, using a programming interface, to an application, a resource of a computational device;
tracking, using a resource manager, the resource; and
determining, using the resource manager, an operation of the application.

2. The method of claim 1, further comprising modifying, by the resource manager, based on the determining the operation of the application, a status of at least a portion of the resource.

3. The method of claim 2, wherein the operation of the application comprises a modification of an execution of the application.

4. The method of claim 3, wherein the modification of the execution of the application is based on an execution state of the application.

5. The method of claim 4, wherein the execution state comprises a valid execution state.

6. The method of any one of claims 1 to 5, further comprising transferring, based on the determining the operation of the application, an execution of the application to a mechanism to control the application.

7. The method of any one of claims 1 to 5, further comprising executing, based on the determining the operation of the application, a mechanism to monitor the operation of the application.

8. The method of any one of claims 1 to 7, further comprising sanitizing, by the resource manager, based on the determining the operation of the application, the resource.

9. The method of any one of claims 1 to 8, further comprising modifying, by the resource manager, based on the determining the operation of the application, a status of a request from the application.

10. The method of claim 9, wherein the request comprises a queued request.

11. The method of claim 1, wherein the resource comprises one of a computational engine, a computational execution environment, a computational device function, or a memory.

12. The method of claim 1, wherein the application comprises one of a program, a virtual machine, a hypervisor, a container, or a container platform.

13. The method of claim 1, wherein the tracking is performed, at least partially, by the computational device.

14. A device comprising:
at least one processor configured to perform the method according to any one of claims 1 to 13.

15. The device according to claim 14, comprising:
a computational resource; and
at least one processor configured to:
provide, using a programming interface, to an application, the computational resource;
track, using a resource manager, the computational resource; and
determine, using the resource manager, an operation of the application.
